# EUROPEAN PATENT SPECIFICATION

(11) **EP 3 884 645 B1**
(45) Date of publication and mention of the grant of the patent: **07.06.2023**
(21) Application number: 19801595.0
(22) Date of filing: 18.11.2019
(51) Int. Cl.: H04L 67/303, H04L 9/40, H04W 12/67, H04W 12/08

(54) **METHOD OF MANAGING NETWORK ACCESS OF A DEVICE AND DEVICE**
VERFAHREN ZUR VERWALTUNG DES NETZWERKZUGANGS EINER VORRICHTUNG UND VORRICHTUNG
PROCÉDÉ DE GESTION D'ACCÈS AU RÉSEAU D'UN DISPOSITIF ET DISPOSITIF

(30) Priority: 23.11.2018 EP 18208148
(43) Date of publication of application: 29.09.2021
(73) Proprietor: Nagravision Sàrl, 1033 Cheseaux-sur-Lausanne (CH)
(72) Inventor: GREMAUD, Fabien, 1033 Cheseaux-sur-Lausanne (CH); MELIA, Telemaco, 1033 Cheseaux-sur-Lausanne (CH); THOMAS, Frederic, 1033 Cheseaux-sur-Lausanne (CH)
(74) Representative: Hoyng Rokh Monegier B.V.
(86) International application number: PCT/EP2019/081618
(87) International publication number: WO 2020/104361

(56) References cited:
- WO-A1-2017/082966
- WO-A2-2010/102259
- BOUHENGUEL R ET AL: "Bluetooth Security in Wearable Computing Applications", HIGH CAPACITY OPTICAL NETWORKS AND ENABLING TECHNOLOGIES, 2008. HONET 2008. INTERNATIONAL SYMPOSIUM ON, IEEE, PISCATAWAY, NJ, USA, 18 November 2008 (2008-11-18), pages 182-186, XP031446275, ISBN: 978-1-4244-2960-8

## Description

### FIELD

The present disclosure relates to methods of managing the network access of devices and, in particular, to a method and device which enable a network access profile of a device to be selected based on a security state of the device, for example, where the security state is indicative of a potential security threat to the device.

### BACKGROUND

A major challenge in internet of things (IoT) network security, and other kinds of network security, is protecting devices in the network, such as sensors, which are under threat or protecting the rest of the network from devices which pose a security threat. A technique for securing such a device is to measure some specific state or value of the device to detect a potential intrusion or any unexpected behaviour or configuration of the device. Conventionally, such measurements are securely reported to a security system in the network which can then take an appropriate reaction to a security threat. This process is typically referred to as the remote attestation.

Remote attestation conventionally requires a device to generate a certificate stating the measurement that has been made. This certificate is then encrypted, often using public-key encryption, and sent to the security system which decrypts the certificate and determines whether there is a security threat. If a threat is detected, action can be taken by the security system in order to counter the threat.

Devices in loT networks are often very basic. For example, the device may be a sensor, such as a pressure sensor. In order to perform remote attestation, the sensor would need to be provisioned with hardware and software capable of generating the required certificate and encryption of the certificate and of communicating this to a security server. This adds to the total cost of the sensor. Additionally, a security system needs to be provided in the network which is capable of managing the remote attestation process. A more cost-effective way of protecting devices in the network is required.

WO 2010/102259 A2 discloses an autonomous validation procedure where the validation of a trusted-system (TS) by an external validator is implicitly done by assuming that the verification of the TS must have been performed entirely locally.

### BRIEF DESCRIPTION OF THE DRAWINGS

Various embodiments are now described by way of example for the purpose of explanation and illustration, with reference to the accompanying drawings in which:
Figure 1 illustrates a device and a network operator, both in communication with a network;
Figure 2 illustrates a device in further detail;
Figure 3 illustrates a network operator in further detail; and
Figure 4 illustrates a process for managing network access of a device.

### SUMMARY OF THE INVENTION

The invention is defined in the appended claims.

### DETAILED DESCRIPTION OF THE DRAWINGS

In overview, disclosed methods and devices enable managing of the network access of a device by the selection of a network access profile from a plurality of network access profiles stored on the device. In order to select a network access profile, a security state of the device is determined at the device. A local decision rule is then executed based on a security state and a network access profile is selected based on an outcome of the execution of the local decision rule.

Advantageously, this enables network access to be controlled locally based on the security state of the device without the need for accessing and/or communicating with a security system, as would be required in a process using remote attestation. For example, if the security state of the device is indicative of a threat, the network access of the device can be managed accordingly by executing a local decision rule and selecting a suitable network access profile based on the outcome.

In some aspects of the disclosure, a method of managing network access of a device, such as a sensor, is provided. A first security state of the device is determined at the device. A local decision rule, based on the first security state, is executed at the device. A first profile from a plurality of network access profiles stored on the device is selected based on an outcome of the execution of the local decision rule. The first profile is used to connect to the network.

Advantageously, access to the network can be controlled in response to a determined security state of the device by processes carried out at the device and without the need for remote attestation, which requires a device to communicate with a separate system configured to monitor the device and controls its connectivity remotely.

In some embodiments, the first profile may prevent the device from using the network. This is advantageous, for example, where the first security state indicates that the device has been infected by malware. If such a profile were selected, based on an outcome of the execution of the local decision rule, it would prevent the device from using the network, effectively isolating the infected device from the network. If a device has become infected with malware, this would help prevent the further spread of the malware across the network.

In some embodiments, the first profile may restrict the device's access to the network. In this way, the device may be isolated from selected other devices and/or systems connected to the network and/or it may be prevented from transmitting potentially harmful data across the network. For example, such a first profile may limit the amount of data which can be transmitted by the device across the network, thereby reducing the risk of the device transmitting harmful data to other devices in the network. If a device has become infected with malware, this would help prevent the further spread of the malware across the network.

In some embodiments, the first profile may restrict the device's access to the network such that the device may only communicate with a security system in the network. Advantageously, the device can be isolated from everything in the network other than the security system. The security system may then run further diagnostics and/or attempt to fix the device or remove the threat in some way.

In some embodiments, data may be received from a security system. Subsequently, a second profile from the plurality of profiles may be selected. The second profile may be used to connect to a network. The data received from a security system may be for fixing an issue with the device. For example, an over-the-air update, such as a firmware or other software update, may be sent to the device. Once the data has been received, the device may subsequently select a second profile, for example a profile which allows the device to have full access to the network. This may happen, for example, after the device has been successfully updated. This second profile may then be used to connect to the network. The second profile may be selected by determining a second security state of the device, executing second local decision rule at the device based on the second security state, and selecting the second profile from the plurality of profiles stored on the device based on an outcome of the execution of the second local decision rule.

In some embodiments, a second security state of the device may be determined after the device has connected to the network using the first profile. A second local decision rule may be executed at the device based on the second security state. A second profile from the plurality of profiles stored on the device may be selected based on an outcome of the execution of the second local decision rule. The second profile may be used to connect to the network. After the first profile has been selected and the device has connected to the network using the first profile, a second security state may be determined and a new profile for connecting to the network may be selected using a local decision rule. If, for example, the second security state indicates that there is no longer a security risk to the device, the local decision rule may determine that a profile which enables full access to the network is selected. In this way, access to the network can be restored once there is no longer a security risk to the device. Accordingly, in some embodiments, the second profile may allow the device to have full access to the network. This process could be periodically repeated such that further profiles are continually selected or, if there is no change in the security state, the profile being used to access the network could be retained.

In some embodiments, once the first profile has been selected, it may be the case that no profile other than the first profile can be used to connect to the network. Advantageously, the device can be permanently isolated from the network. This has particular applications in low value loT devices where fixing the device is costlier than simply permanently isolating the device from the network and/or replacing the device. It may be the case that no profile other than the first profile can be used to connect to the network only of the security state of the device is indicative of a potential security threat to the device, such as a malware infection at the device. Accordingly, in some embodiments, the first security state of the device may be indicative of a potential security threat to the device.

In some embodiments, the step of determining the first security state of the device may comprise determining whether an operational characteristic of the device exceeds a predetermined limit. Advantageously, such a determination provides an indication as to whether a device is operating outside of its normal behaviour and/or in an unexpected manner. This provides an indication of a security threat.

In some embodiments, security data may be received from a network operator, or some other party connected to the network such as a security system, via the network. The first security state of the device may be determined based on the security data. This data may be information regarding a security threat elsewhere in the network. In some embodiments, determining the first security state of the device may include using the security data to determine whether malicious activity has been detected in the network. Advantageously, such a determination provides an indication as to whether a device is at risk of an attack. Subsequently selecting an appropriate network access profile could isolate the device from the malicious activity until it has been dealt with.

In some embodiments, the plurality of profiles may be stored in a secure area of the device. The secure area may be a secure region of a universal integrated circuit card (UICC) of the device, an embedded universal integrated circuit card (eUICC) of the device, or an integrated universal integrated circuit card (iUICC) of the device. Each profile in the plurality of profiles may contain data for enabling identification and authentication of the device by a network operator operating the network. The plurality of profiles may be a plurality network operator defined profiles. Each local decision rule may comprise a rule which determines which profile from a plurality of profiles should be selected based on the security state of the device.

Also disclosed is a device implementing the disclosed methods. In some aspects of the disclosure, a device for transmitting data over a network is provided, the device comprising a processing environment that is configured to determine a first security state of the device, execute a first local decision rule based on the first security state, select a first profile from a plurality of network access profiles stored on the device based on an outcome of the execution of the first local decision rule, and connect to the network using the first profile. In some embodiments, the processing environment of the device may be further configured to carry out any of the above described method.

Further aspects of the disclosure relate to a computer program product comprising instructions which, when the program is executed by a computer, cause the computer to carry out the above described method and a non-transitory computer readable medium having computer-executable instructions that, when executed on a computer system, implement the above described method.

It will be understood that, in the context of the present disclosure, a "Subscriber Identity Module (SIM)" is hardware and/or software that includes an identifier and security keys, in the form of a network access profile, that are used to identify and authenticate the SIM on a mobile network. A SIM can be in the form of a removable SIM, such as a universal integrated circuit card (UICC), comprising a SIM application, which is replaceable within a device. A SIM can be in the form of an embedded SIM (eSIM) such as an embedded universal integrated circuit card (eUICC), comprising a SIM application, which is physically attached to the device's circuit board. A SIM can also be in the form of an integrated SIM (iSIM), such as an integrated universal integrated circuit card (iUICC), comprising a SIM application, which is integrated directly into a device's processor as a separate secure processor core alongside other processing cores.

It will be understood that, in the context of the present disclosure, a "network" could be a telecommunications network, such as the internet or a mobile (cellular) network. Access to a particular network by a device can be controlled by a network operator. The network operator may require that a device be identified and authenticated before allowing it to access to the network. Identification and authentication may be carried out using an identifier and security keys stored as a network access profile on a SIM at the device.

It will be understood that, in the context of the present disclosure, a "network access profile" is a profile which contains information which allows a device to access a network. For example, the network access profile may contain information that enables identification and authentication of the device by a network with which it wishes to connect. Network access profiles may be provisioned by an operator of a particular network. An example of a network access profile is that of an operator profile installed on a SIM card, an embedded SIM or and integrated SIM. Such profiles are provisioned by the network operator either at manufacture or they can be remotely provisioned to a SIM via a network, if the SIM has the required capabilities. Some SIMs can store several network access profiles, only one of which is active at any one time and can be used to connect to a network.

It will be understood that, in the context of the present disclosure, an "identification of a device" is process by which the identity of the device can be confirmed. In the context of a SIM, a reference number, such as an international mobile subscriber identity (IMSI) number, unique to each network access profile stored on the SIM is used by the network operator in order to identify the network access profile and ensure that costs incurred are allocated correctly to a user account associated with the network access profile.

It will be understood that, in the context of the present disclosure, an "authentication of a device" is a process by which the network operator can be reasonably sure that any data received from the device, such as data identifying the device, has not been tampered with or altered in some way and is, therefore, authentic. In the context of a SIM, each network access profile has a corresponding security key which has been assigned by the network operator which is also known to the operator. The device uses the security key to sign data sent to the network operator and the network operator can authenticate the device using this data.

It will be understood that, in the context of the present disclosure, an "operational characteristic" of a device is any measurable characteristic of the device which is indicative of the way in which it is operating. Examples include the amount of data transmitted by the device to a network and the amount of processing power used by the device. Operational characteristics can be used to determine whether the device is operating as expected and/or whether it is operating in a manner outside of its normal operating conditions which could be indicative of a security threat, such as a malware infection.

It will be understood that, in the context of the present disclosure, a "secure area" is a secure region of the device, for example a secure area of an integrated circuit of the device. The secure area may be a "Secure Element", which has its conventional meaning of a tamper-resistant platform (typically a one chip secure microcontroller) capable of securely hosting applications and their confidential and cryptographic data (e.g. key management) in accordance with the rules and security requirements set forth by a set of well-identified trusted authorities. Equally, the secure area may be a secure region of a universal integrated circuit card (UICC), an embedded universal integrated circuit card (eUICC) of the device, or an integrated universal integrated circuit card (iUICC).

It will be understood that, in the context of the present disclosure, a "local decision rule" is a rule which identifies which network access profile from a plurality of network access profiles should be selected based on a determined security state of the device.

It will be understood that, in the context of the present disclosure, a "security state" is an indication of whether or not there is a security threat for a particular device. The security state may indicate that that there is no security threat to the device or that there is a potential, or current, security threat to the device. The security state may also indicate the degree of any potential or current security threat and the reason for this indication.

Some specific embodiments are now described by way of illustration with reference to the accompanying drawings in which like reference numerals refer to like features.

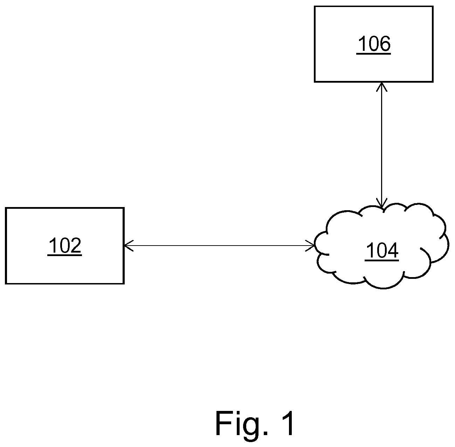

With reference to Figure 1, a device 102 is in communication with a network 104. The device 102 is configured to transmit and/or receive data via the network during normal operation. The device 102 may be a sensor that produces measurement data. Measurement data may relate to pressure, temperature, radioactivity, current, voltage, weight, flow, humidity, acceleration and/or positioning data, amongst other things. The device 102 may be a mobile device, such as a mobile phone. The device 102 gains access to and is able to use the network 104 in a manner that shall be described in greater detail in what follows.

The network 104 may be an loT network. The network 104 may be a telecommunications network, such as the internet or a mobile (cellular) network. The network 104 is operated by a network operator 106. Access to the network 104 by the device 102 is controlled by the network operator 106. The network operator 106 identifies and authenticates the device 102 before allowing it to use to the network 104.

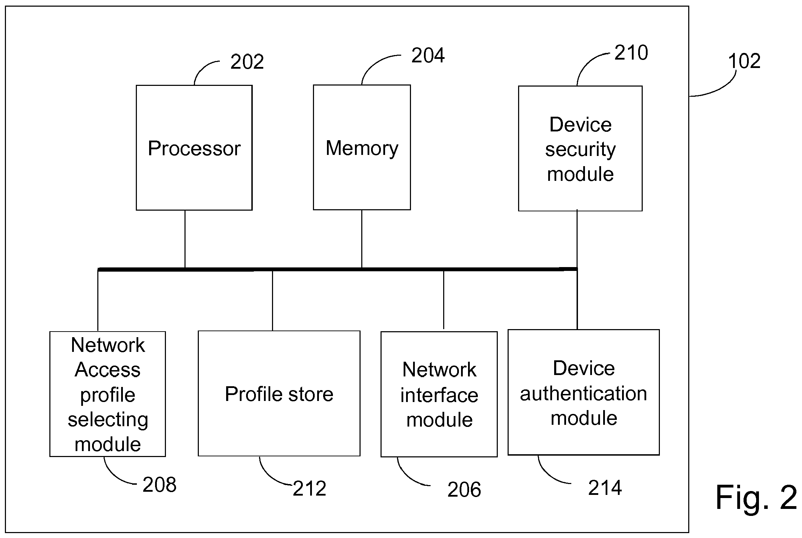

With reference to Figure 2, some embodiments of the device 102 are now described. The transmitter 104 comprises a processor 202, in communication with a memory 204, a network interface module 206, a profile selecting module 208, a device security module 210, a profile store 212 and a device authentication module 214. The processor 202 is arranged to coordinate between the network interface module 206, the profile selecting module 208, the device security module 210, the profile store 212 and the device authentication module 214. The memory 204 can store instructions for execution by the processor 202 to cause the processor 202 to provide desired functionality.

The network interface module 206 is arranged to send and receive data from the device 102 via the network 104. For example, the network interface module 206 may transmit data to the network operator 106 via the network 104. This could be identification and authentication data, sent by the device 102 while it is attempting to access the network 104, or it could be data, for example sensor data, sent by the device 102 once it has gained access to the network 104. The network interface module 206 connects to the network 104 using a network access profile.

The network access profile selecting module 208 runs a local decision rule which identifies a network access profile which should be used by the device 102 to connect to the network 104, based on a determined security state of the device 102. In this way, a particular network access profile is selected based on a particular security state.

The device security module 210 determines the security state of the device 102 using operational characteristics of the device 102. For example, an operational characteristic of the device 102 may be measured and, if it exceeds a predetermined limit, the local decision rule may indicate that the device 102 should use a particular network access profile to access the network 104.

The profile store 212 contains all of the network access profiles stored at the device 102. The profile store 212 may comprise a secure area upon which all of the network access profiles are stored, such as a Secure Element, a universal integrated circuit card (UICC), an embedded universal integrated circuit card (eUICC), or an integrated universal integrated circuit card (iUICC). As described above, each network access profile comprises a reference number, such as an international mobile subscriber identity (IMSI) number, and a security key which has been assigned by the network operator and which is also known to the operator.

Where an iUICC is provided, it may also perform the functions of one or more of the modules described herein including those performed by the network access profile selecting module 208, the device security module 210, and the device authentication module 214: with a UICC, a security processor can perform both the security measurement/local decision and selection of a profile. The integrated secure processor is able to provide network authentication and able to manage profile that can measure the full or partial integrity of the platform e.g. runtime secure boot / integrity attestation.

The device authentication module 214 is configured to apply cryptographic functions to data using the security keys stored in the network access profiles. The device authentication module 214 receives encrypted data from the network operator 106 via the network 104 and sends encrypted data to the network operator 106 via the network 104 by which the device 102 can be authenticated.

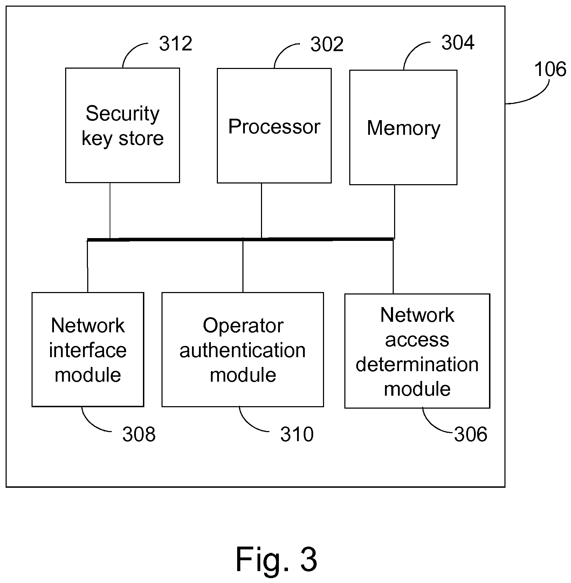

With reference to Figure 3, some embodiments of the network operator 106 are now described. The network operator 106 comprises a processor 302, in communication with a memory 304, a network access determination module 306, a network interface module 308, an operator authentication module 310 and a security key store 312. The processor 302 is arranged to coordinate between the network access determination module 306, the network interface module 308, the operator authentication module 310 and the security key store 312. The memory 304 can store instructions for execution by the processor 302 to cause the processor 302 to provide desired functionality.

The network access determination module 306 controls network access of the device 102, or any the device attempting to use the network 104, based on the network access profile being used by the device 102. If a particular network access profile used by the device indicates that the device 102 is to have either full or restricted access to the network 104, the network access determination module 306 allows or restricts the device's access to the network 104 accordingly.

The network interface module 308 is arranged to send data to the device 102 and receive data from the device 102 via the network 104. The received data could be identification and authentication data, while the device 102 is attempting to access the network 104, or it could be data, for example sensor data, sent by the device 102 once it has gained access to the network 104.

The operator authentication module 310 is configured to apply cryptographic functions to data using the security keys stored in the security key store 312. The operator authentication module 310 generates encrypted data which is sent to the device 102, via the network 104, and also receives encrypted data from the device 102, via the network 104, by which the device 102 can be authenticated. The security key store 312 is a place where security keys corresponding to each network access profile issued by the network operator 106 are securely stored.

In order to be able to use the network 104, the device 102 must be authenticated by the network operator 106. Authentication is carried out using a particular network access profile. In the example authentication process, the device authentication module 214 obtains the reference number of the network access profile which has been selected to access the network 104. This is transmitted by the network interface module 206, via the network 104, to the network operator 106 alongside a request for access to the network 104 and a request for authentication. The operator authentication module 310 then obtains a security key from the security key store 312 which is associated with the received reference number of the selected network access profile. The operator authentication module 310 then generates a nonce (or any suitable random number) and signs the nonce with the security key associated with the reference number of the selected network access profile. An unsigned copy of the nonce is then sent by the network interface module 308 to the device 102 where it is passed to the device authentication module 214. The device authentication module 214 signs the nonce with the security key of the selected network access profile and this is returned to the network operator 106 by the network interface module 206. The operator authentication module 310 compares the nonce signed at the device 102 with the nonce signed by the operator authentication module 310 and, if they match, the network access determination module 306 grants the device access to the network in accordance with the level of access allowed by the selected network access profile.

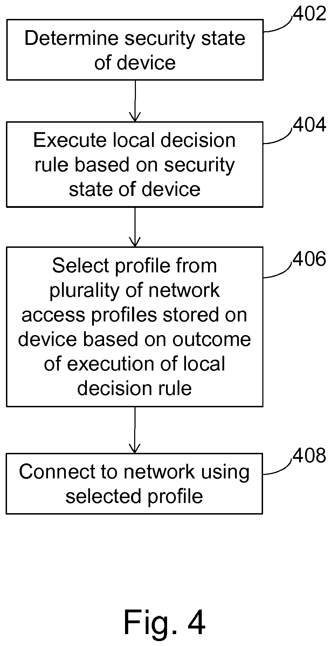

With reference to Figure 4, a method of managing network access of the device 102 is described. The method is described in the context of the data transmission system depicted in Figure 1, the device depicted in Figure 2 and the network operator 106 depicted in Figure 3.

At step 402, the device security module 210 determines a security state of the device 102. The security state may indicate that that there is no security threat to the device or that there is a potential, or current, security threat to the device. The security state may also indicate the degree of any potential or current security threat and the reason for this indication.

This step may require the device security module 210 to determine whether an operational characteristic of the device exceeds a predetermined limit. Examples of operational characteristics include the amount of data transmitted by the device 102 to the network 104 and the amount of processing power used by the device 102. If, for example, the amount of data transmitted by the device 102 during a predetermined window of time exceeds a predetermined limit, the device security module 210 may identify this as a possible a security threat and set the security state of the device 102 accordingly. The security state would indicate that a security threat has been detected as the amount of data transmitted by the device 102 during a particular window has exceeded the predetermined limit.

Alternatively, or additionally, this step may include receiving security data from the network operator 106, or indeed another device or server, via the network 104. This security data may be analysed by the device security module 210 to determine whether malicious activity has been detected in the network 104. The device security module 210 may determine the security state of the device 102 based on the security data. For example, the determined security state may indicate that there is a security threat to the device 102 as a result of malicious activity in the network 104.

Alternatively, or additionally, this step may include the device security module 210 authenticating firmware of the device and determining the security state of the device 102 based on the outcome of the authentication. For example, if the authentication fails, this could be considered to be indicative of a security threat and the determined security state would reflect this.

At step 404, the profile selecting module 208 executes a local decision rule based on the determined security state. The local decision rule indicates which network access profile from a plurality of network access profiles should be selected based on the determined security state of the device 102. For example, if a security state indicates that a security threat has been detected as the amount of data transmitted by the device 102 during a particular window has exceeded a predetermined limit, the outcome of the execution of the local decision rule may indicate that a network access profile enabling only restricted access to the network 104 should be selected. Equally, if the security state indicates that no security threat has been detected, the outcome of the execution of the local decision rule may indicate that a network access profile enabling full access to the network 104 should be selected.

At step 406, the profile selecting module 208 selects a first profile from a plurality of network access profiles stored on the device 102 based on an outcome of the execution of the local decision rule. Dependent on the outcome of the execution of the local decision rule, the selected profile may prevent the device 102 from using the network 104 or it may restrict the device's access to the network 104, for example, such that the device may only communicate with a security system in the network 104. The selected profile may also grant the device 102 full access to the network 104, for example, should no security threat be detected.

Where the device's access to the network 104 is restricted, such that the device may only communicate with a security system in the network 104, the device 102 may receive data from the security system to address the security threat indicated in the determined security state. For example, if the security state indicates a failure in authenticating the firmware of the device 102, this may be communicated by the device 102 to the security system and the data received from a security system may be firmware update and/or other data suitable for fixing the issue. The device 102 may then update its firmware in an attempt to address the security threat.

If the data received from a security system is successful in addressing the security threat, the profile selecting module 208 may select a further profile and this profile may grant the device 102 full access to the network 104. In order to determine that the security threat has been addressed, steps 402, 404 and 406 may be repeated, resulting in the selection of the further profile.

At step 408, the network interface module 206 connects to the network 104 using the profile selected in step 406. The device's level of access to the network 104 is determined by the selected profile.

Optionally, steps 402 to 408 may be repeated periodically to account for any changes in the security state of the device 102. In this way, it can be ensured that the device is continually provisioned with access to the network 104 which is reflective of its security state.

Alternatively, the once the profile has been selected in step 406, no profile other than the first profile may be used to connect to the network. For example, if the determined security state of device at step 402 is indicative of a security threat to the device 102, steps 404 and 406 may result in a network access profile being selected which allows only restricted access to the network 104 or which prevents the device 102 from using the network. If this is the case, once the device 102 has used the selected profile to access to the network 104, it may be prevented from using any other network access profile so as to permanently limit or prevent the device's usage of the network 104.

It is to be understood that the above description is intended to be illustrative, and not restrictive. Many other implementations will be apparent to those of skill in the art upon reading and understanding the above description. Accordingly, the specification and drawings are to be regarded in an illustrative sense rather than a restrictive sense.

## Claims

1. A method of managing network access of a device, the method comprising the steps of:
determining, at the device (102), a first security state of the device;
executing, at the device, a local decision rule based on the first security state;
selecting a first profile from a plurality of network access profiles stored on the device based on an outcome of the execution of the local decision rule; and
regardless of the selected first profile, connecting to the network using the first profile, wherein the first profile determines the device's level of access to the network.

2. The method of claim 1, wherein the first profile either: prevents the device from using the network, restricts the device's access to the network, or allows the device to have full access to the network.

3. The method of claim 1, wherein, when the first profile restricts the device's access to the network, the first profile restricts the device's access to the network such that the device may only communicate with a security system in the network.

4. The method of claim 3, further comprising the steps of:
receiving data from a security system;
selecting a second profile from the plurality of network access profiles; and
connecting to the network using the second profile.

5. The method of any of claims 1 to 3, further comprising the steps of:
determining a second security state of the device after the device has connected to the network using the first profile;
executing a second local decision rule at the device based on the second security state;
selecting a second profile from the plurality of network access profiles based on an outcome of the execution of the second local decision rule; and
connecting to the network using the second profile.

6. The method of either of claims 4 and 5, wherein the second profile allows the device to have full access to the network.

7. The method of any of claims 1 to 3, wherein, once the first profile has been selected, no profile other than the first profile can be used to connect to the network.

8. The method of any preceding claim, wherein the first security state of the device is indicative of a potential security threat to the device.

9. The method of any preceding claim, wherein the step of determining the first security state of the device comprises determining whether an operational characteristic of the device exceeds a predetermined limit.

10. The method of any preceding claim, further comprising the step of receiving security data from a network operator via the network, wherein the first security state of the device is determined based on the security data.

11. The method of claim 10, wherein the step of determining the first security state of the device comprises the step of using the security data to determine whether malicious activity has been detected in the network.

12. A device (102) for transmitting data over a network (104), the device comprising a processing environment configured to:
determine a first security state of the device;
execute a first local decision rule based on the first security state;
select a first profile from a plurality of network access profiles stored on the device based on an outcome of the execution of the first local decision rule; and
regardless of the selected first profile, connect to the network using the first profile, wherein the first profile determines the device's level of access to the network.

13. The method or device of any preceding claim, wherein each profile in the plurality of network access profiles contains data for enabling identification and authentication of the device by a network operator operating the network and/or wherein each local decision rule comprises a rule which determines which network access profile from a plurality of network access profiles should be selected based on the security state of the device.

14. A computer program product comprising instructions which, when the program is executed by a computer, cause the computer to carry out the method of any of claims 1 to 11, and 13.

15. A non-transitory computer readable medium having computer-executable instructions that, when executed on a computer system, implement the method of any of claims 1 to 11, and 13.

## Patentansprüche

1. Verfahren zum Verwalten eines Netzwerkzugriffs einer Vorrichtung, das Verfahren umfassend die Schritte zum:
Bestimmen, an der Vorrichtung (102), eines ersten Sicherheitszustands der Vorrichtung;
Ausführen, an der Vorrichtung, einer lokalen Entscheidungsregel basierend auf dem ersten Sicherheitszustand;
Auswählen eines ersten Profils aus einer Vielzahl von Netzwerkzugriffsprofilen, die auf der Vorrichtung gespeichert ist, basierend auf einem Ergebnis der Ausführung der lokalen Entscheidungsregel; und
unabhängig von dem ausgewählten ersten Profil, Verbinden mit dem Netzwerk unter Verwendung des ersten Profils, wobei das erste Profil die Zugriffsebene der Vorrichtung auf das Netzwerk bestimmt.

2. Verfahren nach Anspruch 1, wobei das erste Profil entweder: die Vorrichtung daran hindert, das Netzwerk zu verwenden, den Zugriff der Vorrichtung auf das Netzwerk einschränkt oder der Vorrichtung ermöglicht, einen vollständigen Zugriff auf das Netzwerk aufzuweisen.

3. Verfahren nach Anspruch 1, wobei, wenn das erste Profil den Zugriff der Vorrichtung auf das Netzwerk einschränkt, das erste Profil den Zugriff der Vorrichtung auf das Netzwerk einschränkt, sodass die Vorrichtung nur mit einem Sicherheitssystem in dem Netzwerk kommunizieren kann.

4. Verfahren nach Anspruch 3, ferner umfassend die Schritte zum:
Empfangen von Daten von einem Sicherheitssystem;
Auswählen eines zweiten Profils aus der Vielzahl von Netzwerkzugriffsprofilen; und
Verbinden mit dem Netzwerk unter Verwendung des zweiten Profils.

5. Verfahren nach einem der Ansprüche 1 bis 3, ferner umfassend die Schritte zum:
Bestimmen eines zweiten Sicherheitszustands der Vorrichtung, nachdem die Vorrichtung unter Verwendung des ersten Profils mit dem Netzwerk verbunden ist;
Ausführen einer zweiten lokalen Entscheidungsregel an der Vorrichtung basierend auf dem zweiten Sicherheitszustand;
Auswählen eines zweiten Profils aus der Vielzahl von Netzwerkzugriffsprofilen basierend auf einem Ergebnis der Ausführung der zweiten lokalen Entscheidungsregel; und
Verbinden mit dem Netzwerk unter Verwendung des zweiten Profils.

6. Verfahren nach einem der Ansprüche 4 und 5, wobei das zweite Profil ermöglicht, dass die Vorrichtung einen vollständigen Zugriff auf das Netzwerk aufweist.

7. Verfahren nach einem der Ansprüche 1 bis 3, wobei, sobald das erste Profil ausgewählt wurde, kein Profil als das erste Profil verwendet werden kann, um mit dem Netzwerk verbunden zu werden.

8. Verfahren nach einem der vorstehenden Ansprüche, wobei der erste Sicherheitszustand der Vorrichtung eine potenzielle Sicherheitsbedrohung für die Vorrichtung angibt.

9. Verfahren nach einem der vorstehenden Ansprüche, wobei der Schritt des Bestimmens des ersten Sicherheitszustands der Vorrichtung das Bestimmen umfasst, ob eine Betriebseigenschaft der Vorrichtung eine zuvor bestimmte Grenze überschreitet.

10. Verfahren nach einem der vorstehenden Ansprüche, ferner umfassend den Schritt des Empfangens von Sicherheitsdaten von einem Netzwerkbetreiber über das Netzwerk, wobei der erste Sicherheitszustand der Vorrichtung basierend auf den Sicherheitsdaten bestimmt wird.

11. Verfahren nach Anspruch 10, wobei der Schritt des Bestimmens des ersten Sicherheitszustands der Vorrichtung den Schritt des Verwendens der Sicherheitsdaten umfasst, um zu bestimmen, ob eine schädliche Aktivität in dem Netzwerk erkannt wurde.

12. Vorrichtung (102) zum Übertragen von Daten über ein Netzwerk (104), die Vorrichtung umfassend eine Verarbeitungsumgebung, die konfiguriert ist zum:
Bestimmen eines ersten Sicherheitszustands der Vorrichtung;
Ausführen einer ersten lokalen Entscheidungsregel basierend auf dem ersten Sicherheitszustand;
Auswählen eines ersten Profils aus einer Vielzahl von Netzwerkzugriffsprofilen, die auf der Vorrichtung gespeichert ist, basierend auf einem Ergebnis der Ausführung der ersten lokalen Entscheidungsregel; und
unabhängig von dem ausgewählten ersten Profil, Verbinden mit dem Netzwerk unter Verwendung des ersten Profils, wobei das erste Profil die Zugriffsebene der Vorrichtung auf das Netzwerk bestimmt.

13. Verfahren oder Vorrichtung nach einem der vorstehenden Ansprüche, wobei jedes Profil in der Vielzahl von Netzwerkzugriffsprofilen Daten zum Ermöglichen einer Identifizierung und einer Authentifizierung der Vorrichtung durch einen Netzwerkbetreiber enthält, der das Netzwerk betreibt, und/oder wobei jede lokale Entscheidungsregel eine Regel umfasst, die bestimmt, welches Netzwerkzugriffsprofil aus einer Vielzahl von Netzwerkzugriffsprofilen basierend auf dem Sicherheitszustand der Vorrichtung ausgewählt werden sollte.

14. Computerprogrammprodukt, umfassend Anweisungen, die, wenn das Programm durch einen Computer ausgeführt wird, den Computer veranlassen, das Verfahren nach einem der Ansprüche 1 bis 11 und 13 vorzunehmen.

15. Nichtflüchtiges computerlesbares Medium, das computerausführbare Anweisungen aufweist, die, wenn sie auf einem Computersystem ausgeführt werden, das Verfahren nach einem der Ansprüche 1 bis 11 und 13 implementieren.

## Revendications

1. Procédé de gestion d'accès réseau d'un dispositif, le procédé comprenant les étapes consistant à :
déterminer, au niveau du dispositif (102), un premier état de sécurité du dispositif ;
exécuter, au niveau du dispositif, une règle de décision locale en fonction du premier état de sécurité ;
sélectionner un premier profil parmi une pluralité de profils d'accès réseau stockés sur le dispositif en fonction d'un résultat de l'exécution de la règle de décision locale ; et
indépendamment du premier profil sélectionné, se connecter au réseau à l'aide du premier profil, dans lequel le premier profil détermine le niveau d'accès au réseau du dispositif.

2. Procédé selon la revendication 1, dans lequel le premier profil soit :
empêche le dispositif d'utiliser le réseau, restreint l'accès au réseau du dispositif, soit permet au dispositif d'avoir un accès complet au réseau.

3. Procédé selon la revendication 1, dans lequel, lorsque le premier profil restreint l'accès au réseau du dispositif, le premier profil restreint l'accès au réseau du dispositif de telle sorte que le dispositif peut seulement communiquer avec un système de sécurité dans le réseau.

4. Procédé selon la revendication 3, comprenant en outre les étapes consistant à :
recevoir des données provenant d'un système de sécurité ;
sélectionner un second profil parmi la pluralité de profils d'accès réseau ; et
se connecter au réseau à l'aide du second profil.

5. Procédé selon l'une quelconque des revendications 1 à 3, comprenant en outre les étapes consistant à :
déterminer un second état de sécurité du dispositif après que le dispositif s'est connecté au réseau à l'aide du premier profil ;
exécuter une seconde règle de décision locale au niveau du dispositif en fonction du second état de sécurité ;
sélectionner un second profil parmi la pluralité de profils d'accès réseau en fonction d'un résultat de l'exécution de la seconde règle de décision locale ; et
se connecter au réseau à l'aide du second profil.

6. Procédé selon l'une ou l'autre des revendications 4 et 5, dans lequel le second profil permet au dispositif d'avoir un accès complet au réseau.

7. Procédé selon l'une quelconque des revendications 1 à 3, dans lequel, une fois que le premier profil a été sélectionné, aucun profil autre que le premier profil ne peut être utilisé pour se connecter au réseau.

8. Procédé selon l'une quelconque revendication précédente, dans lequel le premier état de sécurité du dispositif indique une potentielle menace de sécurité pour le dispositif.

9. Procédé selon l'une quelconque revendication précédente, dans lequel l'étape de détermination du premier état de sécurité du dispositif comprend le fait de déterminer si une caractéristique opérationnelle du dispositif dépasse une limite prédéterminée.

10. Procédé selon l'une quelconque revendication précédente, comprenant en outre l'étape de réception de données de sécurité provenant d'un opérateur de réseau par l'intermédiaire du réseau, dans lequel le premier état de sécurité du dispositif est déterminé en fonction des données de sécurité.

11. Procédé selon la revendication 10, dans lequel l'étape de détermination du premier état de sécurité du dispositif comprend l'étape d'utilisation des données de sécurité pour déterminer si une activité malveillante a été détectée dans le réseau.

12. Dispositif (102) pour transmettre des données sur un réseau (104), le dispositif comprenant un environnement de traitement configuré pour :
déterminer un premier état de sécurité du dispositif ;
exécuter une première règle de décision locale en fonction du premier état de sécurité ;
sélectionner un premier profil parmi une pluralité de profils d'accès réseau stockés sur le dispositif en fonction d'un résultat de l'exécution de la première règle de décision locale ; et
indépendamment du premier profil sélectionné, se connecter au réseau à l'aide du premier profil, dans lequel le premier profil détermine le niveau d'accès au réseau du dispositif.

13. Procédé ou dispositif selon l'une quelconque revendication précédente, dans lequel chaque profil dans la pluralité de profils d'accès réseau contient des données pour permettre une identification et une authentification du dispositif par un opérateur de réseau opérant le réseau et/ou dans lequel chaque règle de décision locale comprend une règle qui détermine quel profil d'accès réseau parmi une pluralité de profils d'accès réseau doit être sélectionné en fonction de l'état de sécurité du dispositif.

14. Produit programme d'ordinateur comprenant des instructions qui, lorsque le programme est exécuté par un ordinateur, amènent l'ordinateur à effectuer le procédé selon l'une quelconque des revendications 1 à 11, et 13.

15. Support non transitoire lisible par ordinateur ayant des instructions exécutables par ordinateur qui, lorsqu'elles sont exécutées sur un système d'ordinateur, implémentent le procédé selon l'une quelconque des revendications 1 à 11, et 13.
